# EUROPEAN PATENT APPLICATION

(11) **EP 2 838 239 A1**
(43) Date of publication of application: **18.02.2015**
(21) Application number: 13180295.1
(22) Date of filing: 13.08.2013
(51) Int. Cl.: H04L 29/06

(54) **Access control system**

(71) Applicant: News UK & Ireland Limited, London E98 1XY (GB)
(72) Inventor: Rudraraju, Srimanth, Ruilslip, Greater London HA4 9NQ (GB)
(74) Representative: Finnie, Peter John

(57) **Abstract**

There is provided a method for delivering web resources to user devices, the method comprising: receiving a plurality of resource requests for a web resource, each resource request being received from a respective user device; and, for each resource request for the web resource, sending an authorisation request to an access server, the authorisation request including authorisation data comprising user identification information. Further, there is provided a method for authorising delivery of web resources, the method comprising: receiving an authorisation request from a content delivery network, the request including authorisation data comprising user identification information; authorising the authorisation request based on the authorisation data; and, returning a response to the content delivery network based on the authorisation, wherein if the authorisation is negative the response includes an address of an alternative web resource different from the requested web resource. A content delivery network, access server, system and computer readable medium are also provided.

## Description

### Background

A web resource is a fundamental element of web architecture. Typically, the term refers to the target of a Uniform Resource Locator (URL). Essentially, a web resource is an element that can be identified on the web. Examples of web resources include web pages, electronic documents, images, and so on. Conventionally, web resources are stored on a webserver for subsequent delivery to a user device or, in a more advanced system, in a content management system. A content management system (CMS) stores the raw content that may be used to form a complete web resource.

A known method of providing scalability and flexibility to the provision of web resources to user devices is to utilise a content delivery network (CDN). A CDN is a large distributed system of servers deployed in multiple data centres across the Internet. The CDN serves content to end-users with high availability and high performance. CDNs provide many advantages including protection from denial of service (DoS) attacks and load distribution.

In the typical scenario of a user requesting a web resource using a browser, the user first enters the URL of the resource, i.e. http://www.onlinepublication.co.uk. The browser performs a Domain Name System (DNS) lookup for www.onlinepublication.co.uk. The URL points to a CDN and the browser requests the resource from the CDN. The CDN examines the URL and fetches all of the content relevant to the requested URL. If the relevant content does not exist in the CDN's cache layer, it requests the source servers for the content. Once the CDN has the relevant content, it stores it in its cache to be rendered to the next user requesting the same URL without going back to the source. The content is then passed to the browser where the resource is rendered for viewing.

The CDN stores pre-rendered copies of web resources, or cached copies of web resources. The data stored by the CDN may include a 'time to live' value (TTL) which is a mechanism that limits the lifetime of data in a computer or network. TTL may be implemented as a counter or timestamp attached to or embedded in the data. The TTL of data may be one hour, for example. In this way the data is refreshed and newly retrieved from the source servers every hour. The source servers may also proactively invalidate the data cached at the CDN. By utilising a CDN, the load on the source servers is significantly reduced because large web resources may only be downloaded once per hour, or as necessary, rather than many times a second.

A limitation of the CDN approach to providing web resources is that it is relatively static, i.e. only the stored resources can be provided to the user device. The CDN approach prevents the implementation of dynamic rules and the ability of the content provider to customise the assets. The CDN approach prevents the tailoring of content to the individual user as each user must be treated equally in order to achieve the benefits of the CDN. Moreover, the CDN is typically a third party solution and beyond the control of the content provider.

In the CDN approach, consent for the user to retrieve a specific resource is conventionally limited to either allowing or denying access, and a more granular access process is not possible. Authentication is typically provided through the use of cookies. A cookie is a small piece of data which is sent from a website and stored in the browser. When the user browses the same website in the future, the data stored in the cookie is sent back to the website by the browser. The CDN approach thus provides merely authentication, rather than authorisation.

Typically the CDN instructs a cookie to be stored in the browser when the user logs in. When the user subsequently accesses a resource, the browser sends the stored cookie to the CDN where it is checked. If the cookie is valid and indicates that the user is entitled to access the requested resource, the user is allowed access to the resource and the resource is sent to the browser for rendering.

To add a degree of granularity to the access process, a content provider may design a set of access rules which dictate which users can access which web resources and content. For example, one particular user may be able to access http://www.onlinepublication.co.uk/sport while another user may entitled to access http://www.onlinepublication.co.uk/news but not /sport. These entitlements are stored in the cookie for the user and checked by the CDN before access is provided. The speed of resource access is directly dependent on the number of access rules as a result of the processing required to check the rules. The number of access rules that the content provider can set is therefore limited. Moreover, the access rules must be set at a high level and are inherently inflexible. It is not possible for the content provider to easily change the access rules or change the user's entitlements.

### Summary of the Invention

According to the present disclosure, there may be provided a method for delivering web resources to user devices, the method comprising: receiving a plurality of resource requests for a web resource, each resource request being received from a respective user device; and, for each resource request for the web resource, sending an authorisation request to an access server, the authorisation request including authorisation data comprising user identification information.

According to the present disclosure, there may also be provided a method for authorising delivery of web resources, the method comprising: receiving an authorisation request from a content delivery network, the request including authorisation data comprising user identification information; authorising the authorisation request based on the authorisation data; and, returning a response to the content delivery network based on the authorisation, wherein if the authorisation is negative the response includes an address of an alternative web resource different from the requested web resource.

The present invention provides for the dynamic delivery of content to a user. The solution is operable to apply a set of dynamic rules for each request to a particular web resource. The solution provides a 'tunnel' or 'pipe' between the content delivery network and the access server and briefly interrupts the process at the CDN. A quick call is made to the access server for instructions. The resource provided to the user device may not be the resource that was requested, but may be any resource. The solution thus introduces a level of indirection.

Whereas previously the access process is limited, in the present method, there is an unlimited degree of granularity. Any number of access rules can be provided and there is potential for each resource to be provided on an individual basis. Each request in the method may be of substantially the same size regardless of the number of access rules since it may only be required that the user be identified, both in the device to content delivery network communication and in the content delivery network to access server communication.

In summary, the present invention provides for the dynamic delivery of content on a per page basis while providing the scalability and protection afforded through the use of a content delivery network. The present invention provides the advantages of both a conventional web server approach in terms of flexibility and a conventional content delivery network approach in terms of scalability, availability and protection. Efficiency and speed improvements are also provided.

The method may further comprise: selecting a web resource based on a response to the authorisation request from the access server; and, sending the selected web resource to the respective user device. If the response to the authorisation request is negative and includes an address of an alternative web resource different than the requested web resource, the step of selecting the web resource comprises selecting the alternative web resource. The user device may thus be unaware that an alternative resource has been provided because the request URL does not change, the CDN simply returns a different resource. The different resource may be personalised for that particular user for example.

The method may further comprise: identifying if the requested web resource is public or protected; and, if the resource is public, sending the requested web resource to the respective user device. In this way, the public face of a web publication may be available to all while the detailed content may be protected.

The authorisation data may comprise a session identifier. The access server may therefore be operable to track the user though the online publication. Additionally, the authorisation data may include an address of the requested web resource. Thus the authorisation may be specific to the requested resource adding granularity to the access process and aiding the dynamic delivery of content. Further, the authorisation data may include contents of a cookie received by the content delivery network.

The method may further comprise: returning a positive response to the content delivery network if the authorisation is successful. The requested resource is therefore provided. The authorisation may be negative if the access server determines that an alternative resource should be provided based on the user identification information. Thus the delivery of content is tailored to the specific user.

A content delivery network and an access server may also be provided and configured to carry out any of the above method steps. The content delivery network and access server may be for use in a suitable system. The system may comprise a content delivery network and an access server, each configured to carry out any of the above aspects of the present invention.

The content delivery network and the access server may be disparate and discrete network entities.For example, the content delivery network may be operated by a service provider and the access server may be operated by the content or resource provider. The access server may for example be independent of the content delivery network such that the security decisions are made in a secure environment. Multiple access servers may be utilised in conjunction with the content delivery network and the content delivery network may function regardless of the nature or indeed the content that it is to serve. This may be as a result of the resource decisions being provided by the access server. Third party services may therefore be utilised without disruption or significant modification.

A computer readable medium may also be provided which comprises instructions which when executed by a processor of a computer, cause the computer to carry out the above method.

### Detailed Description of the Drawings

An example of the present invention will now be described in detail with reference to the accompanying drawings, in which:
Figure 1 shows a process flow for a known identity and access management content delivery system;
Figure 2 shows, schematically, a system architecture according to an embodiment of the present invention;
Figure 3 shows a process flow for an embodiment of the present invention with data stored in a content delivery network;
Figure 4 shows a process flow for a further embodiment of the present invention with a content management system; and,
Figure 5 shows an alternative flow diagram of an embodiment of the present invention.

### Detailed Description

The following are concepts known to those skilled in the art which may be used throughout the present description.

Access Control - Access control is the selective restriction of access to a place or resource. The act of accessing may mean consuming, entering, or using. Permission to access a resource is referred to as authorisation.

Content Delivery Network (CDN) - A content delivery network or content distribution network (CDN) is a large distributed system of servers deployed in multiple data centres across the internet. A CDN serves content to end users with high availability and high performance. CDNs serve a large fraction of internet content, including web objects (text, graphics, URLs and scripts), downloadable objects (media files, software, and documents), applications (e-commerce, portals), live streaming media, on-demand streaming media, and social networks. The above may be referred to as web resources.

Domain Name System (DNS) - A DNS is a network system used to translate names into IP addresses.

Identity and Access Management (IAM) - The terms identity management (IdM), access and identity management (AIM) and identity and access management (IAM) may be used interchangeably. IAM describes the management of individual principles, their authentication, authorisation, and privileges within all across system and enterprise boundaries with a goal of increasing security and productivity while decreasing cost, downtime and repetitive tasks.

Pay Wall - A pay wall is a system that prevents internet users from accessing webpage content without a paid subscription.

Protected Content - Protected content is content which requires some form of subscription or registration and which is available to the general public.

Cookie - a cookie is a small piece of data sent from a website and stored in a user's web browser. When the user browses the same website in the future, the data stored in the cookie is sent back to the website by the browser. Cookies perform particular uses in content delivery such as tracking or authentication. Authentication cookies are the most common method used by web servers to know whether the user is logged in or not and which account they are logged in under.

Authorisation - Authorisation is the function of specifying access rights to resources, which is related to information security and computer security in general and to access control in particular. To authorise is to define access policy. During operation, an authorisation system uses an access control rule to decide whether access requests from authenticated consumers shall be approved or disapproved.

Edge Authorisation - Typically, a CDN provides edge authorisation. In edge authorisation security decisions are delegated to a CDNs edge server by encrypted cookies. Security policy information is communicated to the edge server by the origin server via the encrypted cookie. The CDN edge server uses information to grant or deny access. Access or denial is determined by the IP address of the requesting user, presence or absence of a valid cookie, the address of content being requested, or an expiration time set in the cookie.

Hypertext Transfer Protocol (HTTP) - HTTP is a request-response protocol in the client-server computing model. The client submits an HTTP request and a set of specific status codes are provided in response. HTTP resources are identified and located by uniform resource locators (URLs).

HTTP Response Codes - When a web request is made over HTTP, the server will respond with an HTTP response code which determines the result of the request. The most commonly used HTTP response codes are:
200 - Standard response for all successful HTTP requests
302 - Redirect to a different URL
400 - Bad request, i.e. the incoming request is malformed or incorrect
404 - Resource not found. A resource is requested that does not exist on the server

URL Patterns - A URL Pattern is a set of ordered characters that is modelled after an actual URL. The URL Pattern is used to match one or more specific URLs. Examples include:
www.onlinepublication.co.uk/news/
www.onlinepublication.co.uk/news/*
www.onlinepublication.co.uk/business/
www.onlinepublication.co.uk/public/

Content delivery using an identity and access management system will now be described in the context of an internet user's request to access a fictitious web resource. The scenario assumes that the user has purchased a subscription with the resource provider.

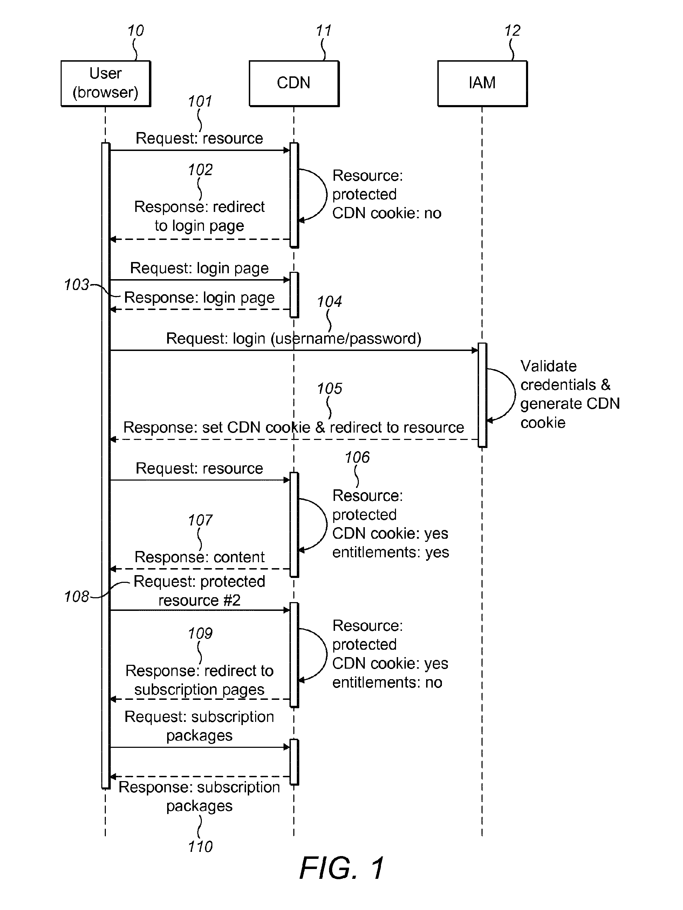

Figure 1 illustrates the typical process flow. Illustrated are the three nodes in the network, the user device and browser 10, a content delivery network (CDN) 11 and an IAM 12. First, the user requests a resource from the CDN (step 101). The CDN then checks internally and determines if the resource is protected and if a CDN cookie exists. In the present example, the resource is protected and no cookie exists. The CDN then issues a redirect to a login page in the HTTP response to the request from the user device.

Next, at step 102, the browser interprets the redirect and redirects the user to a login page. The CDN sends the login page content to the browser upon request (step 103), i.e. as a response. In the login page, at step 104, the user enters login credentials. The login credentials are sent to the IAM for validation. The IAM validates the credentials, generates a CDN cookie with the entitlements of the user and responds to the browser issuing a redirect to the originally requested resource, with the CDN cookie. At step 105, the browser stores the CDN cookie and redirects the user to the requested content. The CDN checks the resource and determines that it is protected. A CDN cookie now exists and the resource exists as part of the entitlement of the user (step 106). At step 107, the CDN sends the requested content to the browser in response to the HTTP request. The content is then rendered by the browser for viewing by the user.

At step 108, the user requests another web resource. As above, the CDN checks the web resource. However, in this situation the CDN determines that the resource is protected. A CDN cookie exists on the browser but the user is not entitled to have access to the requested web resource. The CDN issues a redirect to the browser. The redirect may include a redirect to a page where the user can purchase additional subscriptions. In response to the redirect, at step 109, the browser redirects the user to a subscription page which is provided by the CDN for rendering by the browser. Subsequently, the user may request additional subscriptions which are returned (step 110).

The above process will now be described in the context of a specific fictitious publication having a URL http://www.onlinepulication.co.uk.

A user first enters the URL http://www.onlinepublication.co.uk into a browser. The browser performs a domain name system (DNS) look up for www.onlinepublication.co.uk. The DNS points to content delivery network (CDN). The browser requests content for the URL from the CDN (step 101). The CDN inspects the URL and runs through an internal checklist to see if the requested URL is public or protected. The requested URL is determined to be a public URL and the CDN therefore sends the content back to the browser in response to the request (step 107) where the content is rendered for viewing.

The user then enters the URL http://www.onlinepublication.co.uk/article123.ece into a browser. As above, the browser performs a DNS lookup for www.onlinepublication.co.uk. The DNS points to the CDN. The browser requests content for the URL from the CDN. The CDN inspects the URL and, as above, runs through an internal checklist to determine if the requested URL is public or protected. The requested URL is determined to be protected. The CDN then checks for a specific authentication cookie. The cookie does not exist as this is the first time the user has visited the webpage and has not yet provided his credentials or identified himself. The CDN does not return the content to the browser; instead the CDN sends a HTTP response code 302 to the browser with a new URL. In this example, the new URL is a login URL which requests the user's username and password. The browser in response performs a redirect and sends the user to a new URL.

On the now rendered login page, the user enters a username and password and the credentials are posted to the IAM server. The IAM establishes the user's identity against its database and generates a cookie. The cookie contains the URL Patterns that the user has purchased subscriptions for. Along with the cookie, the IAM responds with a HTTP response code 302 redirect to the CDN. The CDN then sends the HTTP response code 302 with the originally requested URL to the browser. The browser receives the CDN cookie, the HTTP response code 302, and the URL.

The browser then stores the cookie and redirects the user to the new URL (http://www.onlinepublication.co.uk/article123.ece). This time the CDN gets the special cookie along with the request as it is sent by the browser. The CDN inspects the cookie and determines if the requested URL matches the URL Patterns stored in the cookie. If it does, then the user has access to the protected content. If not, the user has not purchased a subscription for the requested URL. In this example, the requested URL exists as part of the URL Patterns stored in the cookie and therefore the CDN responds to the request for content with the stored content. The browser subsequently renders the content for viewing.

In a further exemplary scenario of the known IAM approach to content delivery, the user first requests a URL http://www.onlinepublication.co.uk/article456.ece. The user does not have a subscription to this section. The preliminary steps of this example are the same as the example above, however, when the cookie is sent by the browser to the CDN with the request for the resource the CDN checks the URL along with the request but determines that the requested URL does not match the URL Patterns stored in the cookie. The CDN determines that the user does not have the necessary subscription to view the URL and redirects the user to different content which indicates that the user should upgrade or purchase the necessary subscription.

As described above, according to the present disclosure, the CDN checks for authorisation for every request for a particular resource. An access server provides for authorisation for the request to the CDN.

There are a number of drawbacks associated with the above process using IAM and which are overcome by the method of the present disclosure. The following are merely exemplary limitations and others are of course possible.

One exemplary limitation is that the logic and processing of authorising content lies with the CDN. When the CDN receives a resource request, the CDN reviews the CDN cookie which contains all of the URL Patterns. The CDN reviews the URL Patterns and requested URL for a match and then decides if the requested URL exists part of the user subscription. This removes a certain amount of control on the part of the content provider and requires the CDN to have improved processing power.

Another limitation is that the cookie had to be encrypted to disable users from tampering with the cookie. Whenever there is an update in the private key for the encryption the key must be distributed to the CDN where the key is updated. A typical roll out on a CDN will take four hours which results in a certain amount of uncertainty as to when the private key is updated on the edge servers. During this period the validity of the cookie may fail as the private key is different. In some circumstances this may lead to the CDN making all content public for a period of time.

Further, if a user has modified their subscription, typically there is no way of deleting the cookie or updating the cookie. Cookies are often set to expire after a month and therefore any updates to subscription may take over a month to propagate, unless the user clears the cookies manually or uses a browser without the cookie.

Another limitation is that the content delivery system cannot handle significant loads. The system cannot scale significantly and may crash as the load increases. This may lead to content being made public as the CDN cannot authenticate the user device using the IAM.

Additionally, a change in the URL Patterns (i.e. user subscription entitlement) may result in a four hour delivery window as the logic for authorisation may be handled by the CDN's edge servers and as described above it takes roughly four hours for the new configuration to be propagated through to those servers.

Dynamic delivery of content is also not possible because any change in the logic involved is not possible as typically all processing is hard coded into the CDNs configuration.

Finally, the size of the downloaded cookies is limited. As the number of URL Patterns grows there is a limitation in expanding the number of URL Patterns stored in the cookie, thereby providing a cap to the number of subscriptions and packages available.

In order to resolve the above limitations, a new solution is proposed to handle authorisations with high scalability, reliability and in a secure manner with dynamic delivery of content. The present invention provides such a system. The present invention is effectively a platform that provides many web application programming interfaces (APIs). The APIs will be described in detail below. The present solution checks, for every request for a resource, whether the user is authorised to receive that resource. As is clear from the description of the above known methods of providing authentication and authorisation, such a system is not currently employed and indeed would be counterintuitive. The present disclosure additionally provides for alternative resources to be provided in response the request for content, thereby providing dynamic delivery of content in an improved manner when compared to conventional content delivery systems.

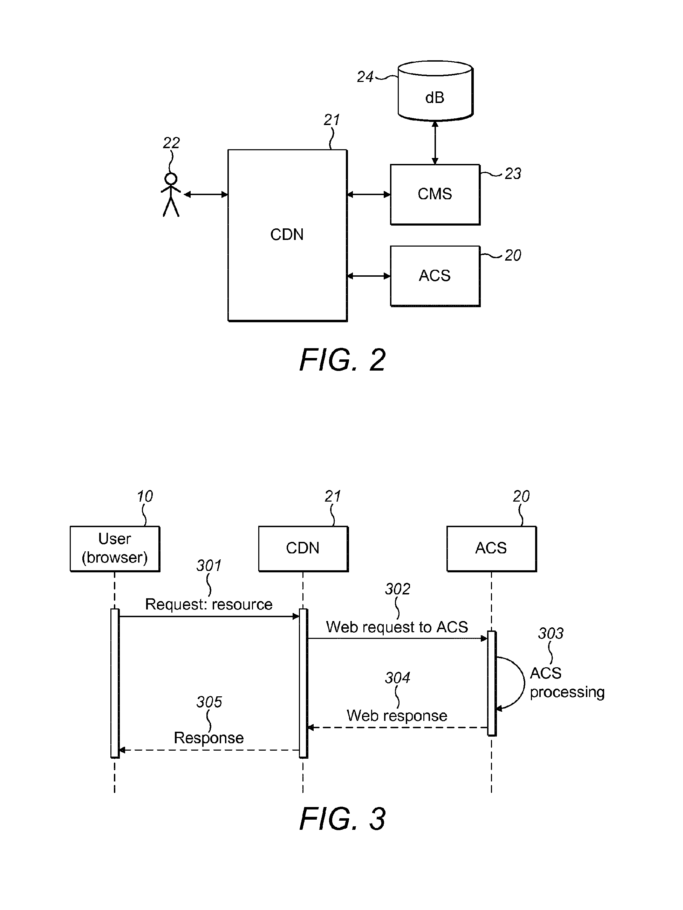

The following is a description of an exemplary solution embodying the principles of the present invention. An application platform is illustrated in Figure 2. The access control system may be referred to as the access control system (ACS), access server or access platform interchangeably throughout the present description. The ACS 20 preferably sits in a third party network to the content delivery network but may be provided within the same network. The platform communicates with the CDN 21 which receives the requests for web resources from user 22. The process will be described in more detail below. The CDN 21 is in communication with a content management system 23 which stores certain content in a database 24. The CMS serves to provide the curated content to the content delivery network for delivery to the user. The content delivery network may cache the content received from the CMS for subsequent requests.

Figure 3 illustrates the process flow of the present invention. Figure 3 illustrates a user device 10 with a browser, content delivery network 21 and access control system 20.

The user first requests a web resource from the content delivery network (step 301). The CDN 21 then puts the request on hold and initiates a web request to the ACS 20 for authorisation (step 302). The CDN 21 sends certain parameters as per the authorisation API specification which will be detailed below. The ACS 20 processes the request and responds with the required parameters (step 304). The CDN 21 accordingly sends the content to the user (step 305). Once the content has been received, the browser renders the content.

For each request received from the user device, the CDN 21 checks with the ACS 20 if that request should be authorised. The ACS replies with either a positive authorisation or an alternative content destination. In this way, the ACS can implement dynamic rules for each request. In essence, the ACS acts as a rules engine which provides access based rules. The CDN asks, for every page, how it should treat the request. The access control system is a tunnel or pipe in the CDN service that introduces a level of indirection. The user does not see a change in the URL requested since the location provided by ACS is simply an alternative destination for the content to be provided.

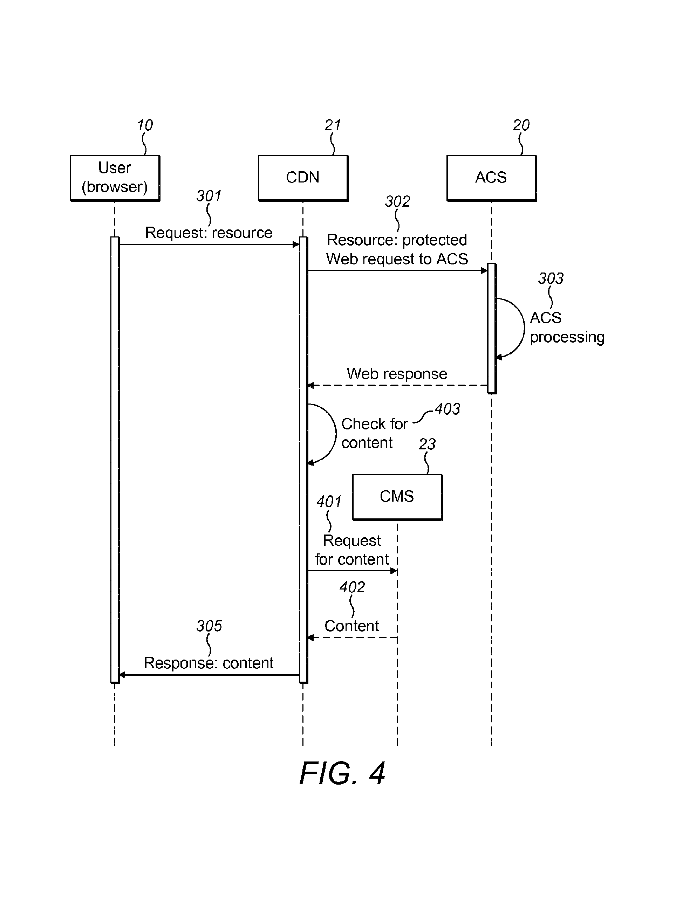

Figure 4 illustrates a process substantially the same as that of Figure 3, however, in Figure 3 the CDN has the required content stored within its network, for example as cached content. In contrast, in the process of Figure 4 the CDN does not have the content stored and so must retrieve the content for delivery to the user.

Steps 301, 302 and 303 are substantially the same as described above. The response from the ACS includes an instruction to a CDN to provide content of which it does not have stored. Upon receipt of the response, which may be a successful response or a redirect response, the CDN checks to see if it has the contents stored (step 403) and if it does not, it requests the content from a content management system (CMS) 23 (step 401). The CMS 23 responds with the content (step 402). The CDN 21 may request the different content required for the resource from different locations. Upon receipt of the content from the CMS 23, the CDN 21 may store the content for future requests before passing the content to the browser for rendering (step 305).

It was described above that the access control system is a platform that exposes many web APIs. One exemplary API is an authentication API. When a request is made to the authentication API with a valid username and password, the access control system responds with a session ID. The session ID is combined with other information to form a cookie which is stored on the browser. All subsequent requests to the ACS that require a user to be identified may send the session ID as part of the request. The authentication API may be invoked by a login page.

An exemplary cookie may be structured as follows:
tid - Session ID or token ID
t - Timestamp (in epoch)
h - Computed hash of the above information

In addition to an authentication API, an authorisation API may be provided. The following are exemplary details of an authorise API.

Input Parameters
ACS Cookie Details - Full contents of the cookie (Can be empty) Session ID - Session ID obtained during authentication (Can be empty) Resource URL - The resource that has to be authorised

Output Parameters
HTTP Status Code
ACS Status Code (A short ACS code informing of the result)
ACS Status Message (A message explaining the result)
ACS Alternate Location (An Alternate Resource)

The ACS Status Message is optional. the variables may be any variable. When a request is made to the authorise API, the request may contain the following parameters:
"ACSCookie": The full cookie contents provided during authentication
"tokenld": The extracted Session ID from the cookie contents i.e. the value of "tid"
"productUrl": The resource that the user has requested from the CDN

The authorise API serves to dictate the communication between the CDN and the ACS. As indicated above, typically the CDN will provide three pieces of information to the ACS in order for the ACS to be able to process its dynamic rules. In response to the HTTP request sent by the CDN, the ACS may respond with an HTTP status code and other information that the CDN is then able to interpret to provide the required function.

The above cookie and API parameters are merely exemplary. It will be understood by the skilled person that the contents of the API and cookie are implementation specific and are not always required.

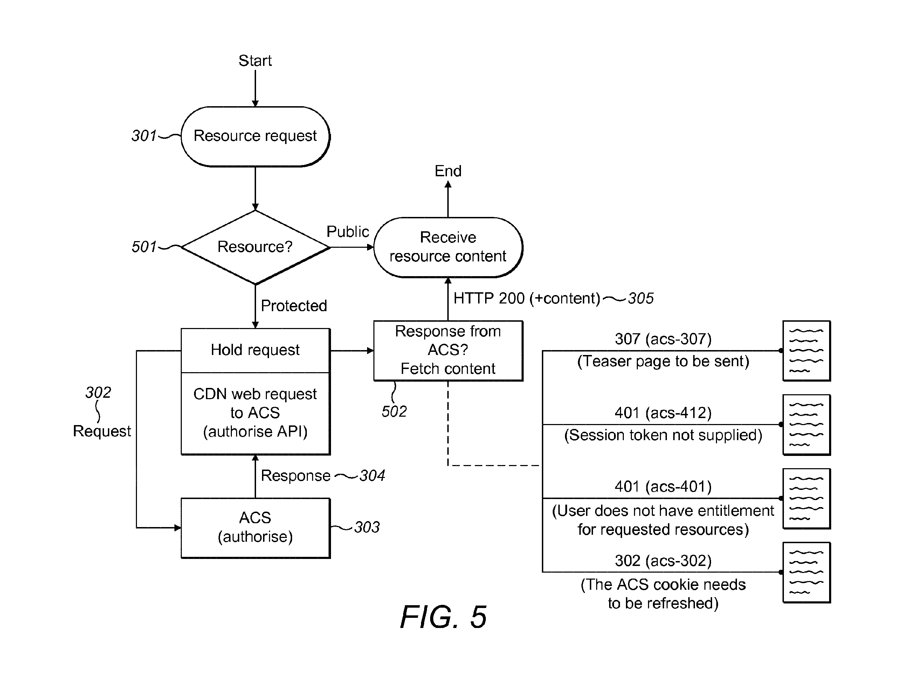

Figure 5 illustrates an alternative view of the process. Figure 5 does not illustrate the process as carried out by different entities but rather by the system as a whole. As illustrated, and described above, at step 301 a resource is requested. The next step in the process is for the CDN to determine if the resource is public or protected. This is illustrated as step 501. To do this, the CDN evaluates the requested URL Pattern against a set of stored patterns. If it is determined that the requested resource is a public resource, the requested content is provided to the browser for rendering. As described above, the content may be retrieved from a cache in the CDN or may be retrieved from a content management system. A 200 'OK' response is sent back to the browser with the content.

If the requested resource is determined by the URL Pattern check to be protected, the CDN places the request on hold. The CDN then passes a request to the ACS using the authorise API. This is illustrated as step 302 and is substantially the same as described above. The ACS then authorises the access at step 303 and provides a response at step 304. The next step performed by the CDN is to evaluate the response. This is illustrated as step 502.

A number of exemplary responses are illustrated in Figure 5. These include: response 307 which instructs a teaser page to be sent; HTTP Response 401 with ACS Status Code 412, where the session token has not been supplied, which instructs a login page to be provided; HTTP Response 401 with ACS Status Code 401, where the user does not have entitlement for the requested resource, which instructs an upgrade subscription page to be provided; and, HTTP Response 302 with ACS Status Code 302 which instructs that the ACS cookie should be refreshed. This latter response instructs the CDN to provide a web resource which sends a new cookie to the browser for replacement of the previous cookie.

The CDN, in checking the response from the ACS, will check the HTTP response for standard HTTP action, will check the ACS Status Code to determine how it should proceed (two different possible options are illustrated in Figure 5 for the unauthorised HTTP response 401), and will check for a new location URL for the content to be retrieved if appropriate.

The CDN proceeds to respond to the browser with HTTP response 200 and includes the resource content. Depending on the response from the ACS, the resource content may be different. Regardless of the content sent, the browser receives a successful response and the user believes it has retrieved the requested response and has no indication otherwise. The URL does not change but the CDN provides different content based on the instructions from the ACS. In this way the ACS provides dynamic delivery of content and specific authorisation for each request for a specific web resource. Once the content has been provided to the browser it is rendered for display. Actions instructed by the resource, such as a login page, may also take place such as refreshing cookies, deleting cookies or other scripted actions. Other responses are of course possible.

A number of specific scenarios will now be described which illustrate exemplary implementations of the present invention.

In a first scenario, the resource requested by the user may be a public resource. It should be noted however that there may be titles protected by the ACS that do not have public URL mappings on the CDN. For these titles every resource request should be authorised by ACS. This includes any page furniture, i.e. image, style sheets, JavaScript, etc., that is part of the webpage that is being requested.

Returning to the public scenario, the user first enters a URL http://www.onlinepublication.co.uk into the browser. The browser performs a DNS lookup which points to the CDN. The browser requests the CDN provide the content of http://www.onlinepublication.co.uk. The CDN inspects the URL and consults an internal list of URL Patterns for a match. The CDN determines if the requested URL is noted as public or protected. In this scenario, the resource is public. This means that the requested resource is noted as public in the CDN. Since the URL is public, the CDN sends the requested contents to the browser where the content is rendered for viewing.

It should be noted that it does not matter if the user is authenticated, i.e. logged in, for resources that are not protected. The CDN directly delivers the content without requesting the ACS for authorisation. Alternative versions of public resources cannot be delivered by CDN as the CDN does not request the ACS for authorisation of public content. Only one set of public content can be delivered for each request.

In a second exemplary scenario, the user is anonymous and the resource requested is protected. In this scenario, the ACS may instruct the CDN to provide an alternative version of the requested resource. This may be particularly useful. For example, the online publication may set the ACS such that a teaser version of the protected resource may be provided to the user which lets the user see a portion of the content and invite the user to purchase a subscription to access the rest.

The user first enters the URL, for example, http://www.onlinepublication.co.uk/news/world/article123.ece into the browser. As above, the browser performs a DNS lookup which points to the CDN. The browser requests the CDN for the content on http://www.onlinepublication.co.uk/news/world/article123.ece. The CDN inspects the URL and checks for matches of public URL Patterns. In this scenario, the URL Pattern does not exist in the list and the CDN determines that this is a protected URL.

The CDN puts the existing request on hold at the edge server. The CDN initiates a new HTTP web request to the ACS to authorise access. This may be using the authorisation API described above. The CDN provides the ACS with the following parameters:
Resource URL -
http://www.onlinepublication.co.uk/news/world/article123.ece
ACS Cookie - Contents of ACS cookie
Session ID - Extracted value from the cookie.

In this scenario, the ACS cookie and session ID entries are empty since the user is anonymous to the CDN and does not previously have a cookie set by the ACS. The user cannot therefore identify the user as there is no session ID. The ACS proceeds to perform an internal check to determine if an alternative version of the protected resource is available since it cannot authorise the user to access the protected resource in full. The ACS determines that an alternative version of the resource is available and the resource URL is built by the ACS based on the original resource URL. ACS then responds to the CDN's web request with the alternative URL. Exemplary parameters may be:
HTTP response code - 307
ACS Status Code - ACS-307
ACS Status Message - Teaser pages are enabled for the requested article
ACS Location -
http://www.onlinepublication.co.uk/news/world/article123.ece?teaser=true

Upon receipt of the response from the ACS, the CDN processes the response and interprets the 307 HTTP response code. The CDN responds to the original request from the user that is on hold and sends the new teaser content to the browser rather than the originally requested content.

As illustrated in Figure 4, if the new resource URL does not exist in the CDN's cache, the CDN reverts to the content management system with the new resource URL (the teaser URL) and caches the content for subsequent delivery.

The 307 HTTP response code is a temporary redirect which instructs that the request should be repeated with another URL but that future requests should still use the original URL. The CDN does not issue a temporary redirect but rather is instructed by ACS to fetch alternate content. The HTTP Response sent by the CDN to the user device will be HTTP 200 together with the alternate content. there is no change in the originally requested URL as the user device made a request and received content.

In an alternative scenario, similar to the previous scenario, the user is anonymous and the requested resource protected, however there does not exist an alternative resource to be provided at the ACS stage.

In this scenario, the preliminary steps are as described above. The difference occurs however as the ACS processes the web request. As above, the ACS cannot identify the user because there is no session ID included with the request to the ACS from the CDN. Accordingly, the ACS attempts to identify if an alternative version of the protected resource exists. Since there is no alternative resource available, and the user is unknown, the ACS requests the CDN to redirect the user to a login page in order to identify the user. The ACS response to the CDN's request includes the following parameters:
HTTP response code - 401
ACS Status Code - ACS-412
ACS Status Message - session ID not supplied
ACS Location - https://login.onlinepublication.co.uk

Upon receipt of the response from the ACS, the CDN processes the response and interprets the 401 HTTP response code. 401 is the HTTP response code specifically for use if a user is not authorised. ACS Status Code ACS-412 is the response code for use if the user needs to be authenticated and must have an ACS cookie. By interpreting the response, the CDN responds to the original request from the user which it has placed on hold and sends an HTTP response code of 302 back to the browser with a new location. The 302 response code is used to instruct a redirect. Upon receipt of the HTTP response code 302, the browser redirects the user to a new location, i.e. https://www.onlinepublication.co.uk. The CDN then provides the content for this page as it is most likely a public resource. This page typically requests the user to login or purchase a subscription.

In the following scenarios, the user is logged in. As such, the user has a cookie stored on the device and a session ID is available.

In the first scenario of this series, the user is not subscribed to the requested resource, the requested resource is protected, there is no alternative resource available and the cookie is intact, i.e. neither tampered with nor about to expire. The preliminary steps of this scenario are the same as the scenarios described above, however differences occur as the ACS processes the web request. In this scenario, the ACS cookie and session ID are both available. The ACS first checks the integrity of the cookie. The cookie hash is valid and has not been tampered with. The ACS then identifies the user from the session ID and retrieves the user's entitlement from its database. The ACS database may be integral with ACS or remote. The ACS then performs a check on the user's entitlement to verify if the requested resource is part of the user's subscription. The user does not have entitlement to access the requested resource. Once it has determined that the user is not entitled to access the resource, the ACS checks to determine if an alternative version of the protected rules is available such as a teaser page. In this scenario no alternative is available. Since no alternative is available, the ACS requests a CDN to redirect the user to an upgrade subscription page. The user is thus directed to provide the necessary entitlement for the protected resource. An exemplary ACS response to the CDN's request includes the following parameters:
HTTP response code - 401
ACS Status Code - ACS-401
ACS Status Message - User does not have entitlement for requested product
ACS Location - https://login.onlinepublication.co.uk/upgradesubscription

Upon receipt of the response, the CDN processes the response and interprets the 401 response code. The CDN responds to the original request that it has placed on hold and sends an HTTP response redirect code of 302 to the browser with the new location. The browser redirects the user to the new location. Since the URL Pattern is identified by the CDN to be public, the CDN provides the user with the content which in this case may be various options to upgrade the user's subscription.

In an alternative scenario, instead of providing an upgrade subscription page, the ACS may provide a teaser page since the ACS determined that an alternative version of the resource exists. In this scenario, the user is logged in, the user does not have entitlement to the requested resource, the resource is protected, an alternative resource is available and the ACS cookie is intact.

The preliminary stages are the same as the first described scenario. When the ACS proceeds to process the web request, in this scenario, the ACS determines that the user's entitlement do not allow the user to access the requested resource. The ACS performs a check to see if an alternative version is available, which it is in this case. The ACS builds an alternative resource URL based on the original resource URL and responds to the CDN request with a redirect including the alternative URL. Exemplary parameters include:
HTTP response code - 307
ACS Status Code - ACS-307
ACS Status Message - Teaser pages are enabled for the requested article
ACS Location - http://www.onlinepublication.co.uk/news/world/article123.exe?teaser=true

In this case, the URL may be different but the URL is for the CDN to fetch the alternative content and is not visible to the end user. The CDN fetches the content from the alternate location and renders the content on the originally requested resource. Upon receipt of the response, the CDN processes the response and interprets the 307 response code. The CDN responds to the original request from the user that it has placed on hold and sends the alternative content to the browser rather than the originally requested content. From the perspective of the user, the requested content is provided.

In a further scenario, the user may be logged in, is entitled to view the requested resource, the resource is protected and the ACS cookie is intact. This scenario differs from the above scenarios in that the user is entitled to view the requested resource.

The preliminary steps are the same as the scenarios above. In this scenario, when the ACS processes the request, the ACS checks the integrity of the cookie, the cookie hash is valid and has not been tampered with and so the ACS proceeds. The ACS identifies the user from the session ID and retrieves the user's entitlement from the database. The ACS then performs a check of the user's entitlements to verify if the requested resource is to be provided. The user has access to the requested resource as part of its entitlements. The ACS thus indicates to the CDN that the requested resource should be provided. Exemplary parameters include:
HTTP response code - 200
ACS Status Code - ACS-200
ACS Status Message -
ACS Location -

HTTP response code 200 is known as 'OK' and is a standard response for successful requests. The CDN proceeds to process the response and interprets the successful response code. The CDN responds to the original request that it has placed on hold by sending a 200 HTTP response code to the browser along with the requested content. The content may have been retrieved from a cache of the CDN or from the CMS if it is the first time that resource has been requested. The browser renders the content for viewing once it has been received by the CDN. The user thus views the intended resource.

In further scenario, although the user may be entitled to view a requested resource, the service provider may instead intend that the user views a different resource. In this exemplary scenario, the user is logged in, has entitlements for the requested resource, the resource is protected, there is an alternative resource and the cookie is intact.

In this scenario, after the step of checking that the user has access for the requested resource, the ACS checks to see if an alternative resource exists. Since an alternative version exists the ACS builds the alternative resource URL based on the original resource URL. The ACS sends this resource URL to the CDN for redirection. Exemplary response by the ACS to the CDN's web request may include the following parameters:
HTTP response code - 307
ACS Status Code - ACS-307
ACS Status Message - Alternative version of the resource exists
ACS Location - New resource URL

Upon receipt of the response from the ACS the CDN interprets the 307 HTTP response code as an instruction to redirect. The CDN responds the original request from the user and sends the new content for the new resource URL to the browser rather than the originally requested content. The user may not know that they have been provided a different resource. The CDN may alternatively issue a redirect to the browser at which point the user can determine that a redirect has occurred.

In a final exemplary scenario, the system is operable to determine if a cookie has been tampered with, thus improving security. In this scenario, when the ACS processes the web request, the ACS determines that a cookie and session ID are available. The ACS first checks the integrity of the cookie. The ACS determines that the cookie has been tampered with. The ACS removes the session ID from its database so that it cannot be used again. The ACS then responds to the CDN indicating that the cookie contents are invalid and that the sessions ID will not be accepted again. Exemplary parameters include:
HTTP response code - 401
ACS Status Code - ACS-406
ACS Status Message - The cookie contents are invalid
ACS Location - https://login.onlinepublication.co.uk/logout

Response code 406 indicates that the cookies contents are invalid or have been tampered with and hence ACS is not responding to the request.

The CDN processes the response from the ACS and interprets the 401 response code. The CDN responds to the original request from the user by sending a response code 302, i.e. a redirect, back to the browser with a new location. The user is not permitted access to the requested resource and is shown that it has been logged out. Since the URL Pattern is identified by the CDN as public, when the browser redirects the user to the new location the CDN provides the content of that resource. The content of that resource typically instructs the browser to delete the cookie that has been stored.

The above scenario provides for improved security of requested resources and prevents tampering in order to gain access. The user is redirected to a logout page rather than being provided with the requested resource. In contrast to the above scenarios where the user may not be able to determine that they have been provided a different resource than requested, it is clear that in this scenario they had been logged out of the system.

It will be clear that the above scenarios are merely exemplary and used to demonstrate certain aspects of the overall system and examples of how the present invention may be implemented in practice.

While the present invention has been described in the context of certain servers or networks, it will be understood that the principles described may be implemented through any arrangement of suitable computing devices, distributed computing devices, or media not yet known. The principles are not limited to any specific operating system or architecture and indeed are designed to be system or platform agnostic. The device described as a user device above may be any sort of suitable device such as a personal computer, tablet computer or smartphone.

It is important to note that while the present invention has been described in the context of a fully functioning data processing system, those of ordinary skill in the art will appreciate that the processes of the present invention are capable of being distributed in the form of a computer readable medium of instructions and a variety of forms and that the present invention applies equally regardless of a particular type of signal bearing media actually used to carry out distribution. Example of computer readable media include recordable-type media such as floppy discs, a hard disc drive, RAM, CD-ROMs and DVDs as well as transmission-type media such as digital and analogue communication links.

## Claims

1. A method for delivering web resources to user devices, the method comprising:
receiving a plurality of resource requests for a web resource, each resource request being received from a respective user device; and,
for each resource request for the web resource, sending an authorisation request to an access server, the authorisation request including authorisation data comprising user identification information.

2. A method according to claim 1, further comprising:
selecting a web resource based on a response to the authorisation request from the access server; and,
sending the selected web resource to the respective user device.

3. A method according to claim 2, in which, if the response to the authorisation request is negative and includes an address of an alternative web resource different than the requested web resource, the step of selecting the web resource comprises selecting the alternative web resource.

4. A method for authorising delivery of web resources, the method comprising:
receiving an authorisation request from a content delivery network, the request including authorisation data comprising user identification information;
authorising the authorisation request based on the authorisation data;
and,
returning a response to the content delivery network based on the authorisation, wherein if the authorisation is negative the response includes an address of an alternative web resource different from the requested web resource.

5. A method according any preceding claim, in which the authorisation data comprises a session identifier.

6. A method according to any preceding claim, in which the authorisation data includes an address of the requested web resource.

7. A method according to any preceding claim, in which the authorisation data includes contents of a cookie received by the content delivery network.

8. A method according to any of claims 4 to 7, further comprising:
returning a positive response to the content delivery network if the authorisation is successful.

9. A method according to any of claims 4 to 8, in which the authorisation is negative if the access server determines that an alternative resource should be provided based on the user identification information.

10. A content delivery network adapted to carry out the method of any of claims 1-3 and 5 to 9 when dependent on claim 1.

11. An access server adapted to carry out the method of any of claims 4 to 9 when dependent on claim 4.

12. A computer readable medium comprising instructions which when executed by a processor of a computer cause the computer to carry out the method of any of claims 1 to 9.

13. A system for delivering web resources to user devices, the system comprising a content delivery network according to claim 10 and an access server according to claim 11.

14. A system according to claim 13, in which the content delivery network and the access server are disparate and discrete network entities.
